# EUROPÄISCHE PATENTSCHRIFT

(11) **EP 0 710 751 B1**
(45) Veröffentlichungstag und Bekanntmachung des Hinweises auf die Patenterteilung: **16.05.2001**
(21) Anmeldenummer: 95116664.4
(22) Anmeldetag: 23.10.1995
(51) Int. Cl.: E04F 13/08, E04F 19/08, H02G 3/12

(54) **Element zur Befestigung von Apparaten und Gegenständen auf einer aussenisolierten Gebäudefassade und dgl.**
Element for the fastening of devices or objects on an externally insulated façade
Elément pour la fixation d'appareils ou d'objets sur une façade isolée extérieurement ou similaire

(30) Priorität: 01.11.1994 CH 326094
(43) Veröffentlichungstag der Anmeldung: 08.05.1996
(73) Patentinhaber: AGRO AG, CH-5502 Hunzenschwil (CH)
(72) Erfinder: Hablützel, Richard, CH-8903 Birmensdorf (CH)
(74) Vertreter: Groner, Manfred

(56) Entgegenhaltungen:
- FR-A- 2 685 138

## Beschreibung

Die vorliegende Erfindung bezieht sich auf ein Element gemäss dem Oberbegriff des Anspruchs 1.

Es ist bekannt bei Gebäuden, Decken und/oder Wände mittels Wärmedämmplatten aus Schaumstoff oder dgl. als Kälteschutz zu isolieren. Die Dicke solcher Dämmplatten beträgt in der Regel 80 bis 160 Millimeter. Bei Gebäudefassaden zum Beispiel werden auf das Rohmauerwerk oder im Falle einer Nachisolation auf den gereinigten Altputz die Dämmplatten fugenlos aufgeklebt und mit pilzförmigen Kunststoffnägeln am Mauerwerk zusätzlich mechanisch befestigt. Danach wird auf die Plattenaussenseite ein Netz aufgezogen und mit einem grundputzartigen Kleber angeklebt. Nach dem Abbinden bzw. Aushärten dieser grundputzartigen Klebeschicht wird der Fertigputz aufgetragen. Ein Nachteil dieser Aussenisolation ist, dass auf dem Verputz keine Lampen, Sensoren, Kleiderhaken, Riegel für Fensterläden, Briden für Wasserleitungen und Dachwasserablaufrohre, Hausnummernschilder, usw. mit normalen Dübeln und Schrauben befestigbar sind. Sind solche Gegenstände fassadenseitig anzubringen, werden zuerst Holzklötze in die Isolationsschicht versenkt, am Mauerwerk festgeschraubt und dann der Gegenstand am Holzklotz festgeschraubt. Es ist auch bekannt, überlange, die Isolationsschicht durchdringende Schrauben zu verwenden, die mit der Spitze in einen im Mauerwerk eingelassenen Dübel eingeschraubt werden. Die Haltbarkeit der erwähnten Holzklötze ist indessen nicht gewährleistet, da sie in der Wasserdampfkondensationszone der Wand liegen, daher häufig nass werden und mit der Zeit faulen können. Greifen an den mit überlangen Schrauben befestigten Einrichtungen gelegentlich quer zur Schraubenachse orientierte Kräfte unterschiedlicher Grösse an, biegt sich die Schraube unterschiedlich stark und vergrössert allmählich ihre durch den Putz und die Isolation gehende Bohrung in die allmählich Wasser ein- und hinter die Isolation gelangen kann.

Ähnliche Probleme stellen sich, wenn an einer isolierten Fassade elektrische Schalter, Steckdosen oder dgl. zu montieren sind, da die Einlasskasten, auf denen solche Apparate montiert werden, in der Isolationsschicht nur ungenügenden Halt finden und sich mit der Zeit lockern.

Für eine stabilere Befestigung von Einlasskasten in der Isolationsschicht ist bekannt, zwei L-förmige Winkelstücke symmetrisch und mit Abstand voneinander auf das Mauerwerk aufzuschrauben und zwischen den parallelen, auf die Dicke der Isolierschicht abgelängten Schenkeln ein Einbaukasten zu befestigen. Dieses Vorgehen verbessert die Stabilität des eingebauten Einbaukastens. Befriedigend ist sie indessen nicht. Zudem ist die Montage der Winkelstücke hinsichtlich ihrer genauen gegenseitigen Lage aufwendig.

Die vorliegende Erfindung stellt sich daher die Aufgabe, eine Einrichtung zu schaffen, die einfach handhabbar ist und die eine zuverlässige Befestigung von Gegenständen, Apparaten und dgl. an einer Fassade mit Aussenisolation ermöglicht.

Anhand der beiliegenden schematischen Zeichnung wird die Erfindung beispielsweise erläutert. Es zeigen:
- Fig. 1: eine perspektivische Ansicht eines ersten Ausführungsbeispiels eines Elementes,
- Fig. 2: das Element nach Fig. 1 in Explosionsdarstellung,
- Fig. 3: eine Seitenansicht des Elementes nach Fig. 1 in eingebautem Zustand,
- Fig. 4: einen Schnitt entsprechend der Linie IV-IV in Fig. 1,
- Fig. 5: eine perspektivische Darstellung eines zweiten Ausführungsbeispiels,
- Fig. 6: eine Seitenansicht des Ausführungsbeispiels nach Fig. 5 und
- Fig. 7: eine Schnittdarstellung eines dritten Ausführungsbeispiels.

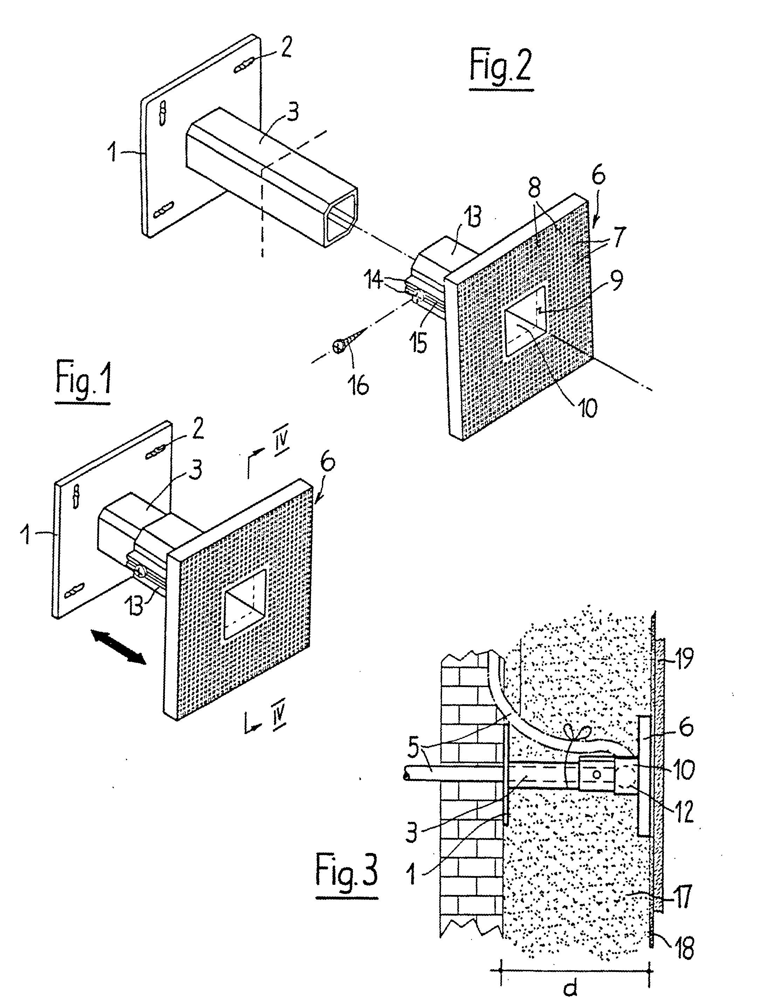

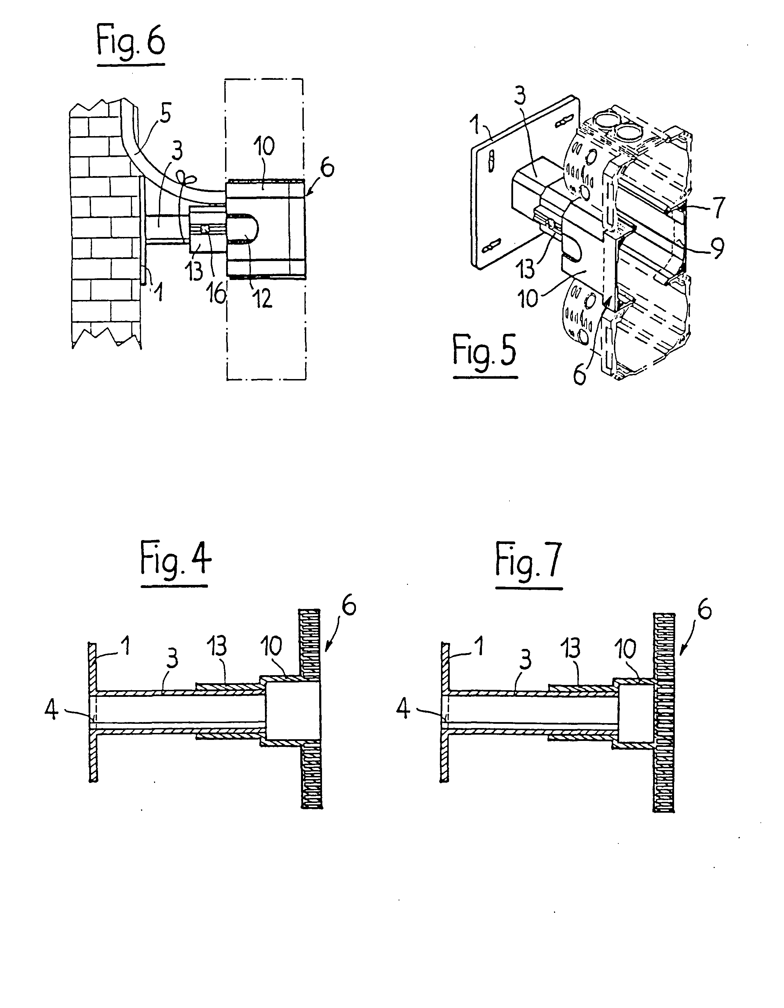

Das Element nach den Fig. 1 bis 4 weist eine Verankerungsplatte 1 mit Schlitzlöchern 2 in den Ecken auf. Rechtwinklig von der Mitte der Verankerungsplatte 1 ragt auf ihrer Vorderseite ein rohrförmiger Träger 3 weg, der einstückig mit der Platte 1 gefertigt ist. Der Träger 3 schliesst mit seinem Innenquerschnitt bündig an eine Durchbrechung 4 in der Platte 1 an (Fig. 4), so dass das Ende eines Installationsrohres 5 von der Rückseite der Platte 1 in den Träger 3 hinein und durch diesen hindurch geschoben werden kann. Der Träger 3 hat ein im Querschnitt quadratisches Hohlprofil mit zwei sich gegenüber liegenden, gebrochenen Kanten. Die Länge des Trägers 3 ist, wie mit zwei gestrichelten Linien in Fig. 2 gezeigt mittels einer Säge oder eines Messers auf jede gewünschte Länge zuschneidbar. Weiter weist das Element eine wabenartig gestaltete Trägerplatte 6 auf, auf deren gelochter Vorderseite die an eine Fassade anzubringenden Gegenstände oder Apparate festschraubbar sind. Die nach der Vorderseite offenen, schachbrettartig aneinander gereihten Zellen 7 werden durch sich rechtwinklig kreuzende, 1 bis 2 Millimeter dicke Zellwände 8 gebildet. An eine Durchbrechung 9 in der Mitte der Trägerplatte 6 schliesst rückseitig ein Einlasskasten 10 an, dessen lichter Querschnitt gleich jenem der Durchbrechung 9 ist. Die Seitenwände des Einlasskastens 10 sind mit herausdrückbaren Wandabschnitten 12 versehen, durch welche im Bedarfsfall ein Installationsrohr 5 eingeführt werden kann. An den Einlasskasten 10 schliesst eine hülsenförmige Führung 13 an, die zum Einlasskasten 10 hin offen ist. Der Innenquerschnitt der Führung 13 entspricht dem Aussenquerschnitt des Trägers 3, so dass dieser praktisch spielfrei in die Führung 13 hineinschiebbar ist. Der Träger 3 und die Führung 13 können somit teleskopartig in- und auseinander geschoben werden. Aussenseitig ist die Führung 13 mit zwei achsparallelen Rippen 14 versehen, welche eine Nut 15 bilden. An jeder beliebigen Stelle dieser Nut 15 ist radial zur Führungslängsachse die Spitze einer Schraube 16 mit selbstschneidendem Gewinde schraubbar. Die Trägerplatte 6, der Einlasskasten 10 und die Führung 13 sind (wie die Verankerungsplatte 1 und der Träger 3) einstückig aus einem verrottungsresistenten Kunststoff gefertigt.

Wird eine Fassade aussen isoliert, wird an jeder Stelle, an der ein Gegenstand (Lampe, Sensor, Klapphaken für Kleider, etc.) zu befestigen ist, eine Verankerungsplatte 10 auf der Rohmauer mittels Schrauben befestigt (Fig. 3). Entsprechend der Dicke "d" der Isolationsschicht 17 wird das freie Ende des Trägers 3 so weit abgetrennt, dass bei aufgesteckter Führung 13 sein verkürztes Ende im Bereich des Überganges von der Führung 13 zum Einlasskasten 10 liegt und der Abstand der Vorderseite der Montageplatte 6 von der Rohmauer in etwa der Dicke "d" der Isolationsschicht 17 entspricht. In dieser einjustierten Lage der Führung 13 auf dem Träger 3 wird die Schraube 16 ein- und durch die Wand der Führung 13 und des Trägers 3 hindurchgeschraubt, so dass eine feste, formschlüssige Verbindung zwischen diesen beiden Teilen (3, 13) entsteht.

Ist an der Trägerplatte 6 ein elektrischer Apparat wie zum Beispiel eine Lampe zu befestigen, ist zu dieser Stelle ein Installationsrohr 5 verlegt. Das Rohrende wird vor dem Anschrauben der Verankerungsplatte 1 von deren Rückseite her durch den Träger 3 und die Führung 13 hindurch geschoben. Nach dem Befestigen der Verankerungsplatte 1 wird das in den Einlasskasten 10 vorstehende Rohrende abgeschnitten. Es ist indessen auch möglich, ein in einem Mauerschlitz verlegtes Installationsrohr 5 (in Fig. 3 strichpunktiert gezeichnet) von aussen durch einen ausgebrochenen Wandabschnitt 12 hindurch in den Einlasskasten 10 zu führen.

Danach wird die Isolationsschicht 17 an der Rohmauer befestigt, wobei für das montierte Element entsprechende Aussparungen aus dem Schaumstoff auszuschneiden sind, damit keine Kältebrücke entsteht. Nach dem Anbringen der Isolationsschicht 17 ist deren Aussenseite bündig mit der Aussenseite der Trägerplatte 6. Auf die Isolationsschicht 17 und die Trägerplatte 6 werden danach ein Haftputz 18 und dann ein Fertigputz 19 aufgezogen. Nach dem Aushärten des Fertigputzes 19 kann die Lampe vor der Trägerplatte 6 auf die Fassade aufgesetzt und mittels durch die Putzschichten 18, 19 hindurch in die Trägerplatte 6 geschraubten Schrauben befestigt werden. Hierbei haben die Zellen 7 der Trägerplatte 6 die Funktion von Dübeln.

Beim Beispiel nach den Fig. 5 und 6 bezeichnen gleiche Hinweisziffern gleiche Teile wie beim Beispiel nach den Fig. 1 bis 4, so dass auf deren wiederholende Beschreibung verzichtet wird. Der wesentliche Unterschied besteht einerseits darin, dass der Einlasskasten 10 sowohl hinsichtlich Tiefe und lichtem Querschnitt wesentlich grösser als beim vorangehend beschriebenen Beispiel ist. Anderseits ist die Querschnittsfläche der Trägerplatte 6 kleiner und bildet mit dem Einlasskasten 10 zusammen in Form und Grösse einen herkömmlichen Einlasskasten. Wie strichpunktiert angedeutet, können sowohl die Trägerplatte 6 als auch der Einlasskasten 13 verdoppelt oder verdreifacht sein, wenn fassadenaussenseitig zwei bis drei Schalter und/oder Steckdosen anzubringen sind.

Nach einem nicht dargestellten Ausführungsbeispiel können die Führung 13 und der Einlasskasten 10 den gleichen lichten Querschnitt aufweisen.

Weiter ist es möglich, die Führung 13 mit der Verankerungsplatte 1 einerseits und den Träger 3 mit der Trägerplatte 6 anderseits einstückig zu fertigen.

Die Querschnitte des Trägers 3 und der Führung 13 können auch kreuzförmig sein. Haben der Träger 3 und die Führung 13 einen kreisrunden Querschnitt, kann für die Längeneinstellung des Elementes am Träger 3 ein Aussen- und an der Führung 13 ein Innengewinde vorgesehen sein.

Ist das Element nur zur Befestigung nicht elektrischer Apparate, wie Kleiderhaken, Riegel für Fensterläden, Firmenschilder und dgl. vorgesehen, kann, wie Fig. 7 zeigt, die Durchbrechung 9 in der Trägerplatte 6 entfallen.

Obwohl das Element als Träger zur Befestigung von Gegenständen an einer Aussenfassade beschrieben ist, kann es auch nur zu deren Schutz an besonders schlaggefährdeten Fassadenstellen verwendet werden. In diesem Falle wird die Trägerplatte 6 vorzugsweise wesentlich grösser ausgestaltet, wobei mehrere Elemente an den schlaggefährdeten Stellen flächendeckend aneinander gereiht werden.

## Patentansprüche

1. Element zur Befestigung von Apparaten oder Gegenständen auf einer aussenisolierten Gebäudefassade oder auf einer isolierten Wand oder Decke, mit einem am Mauerwerk zu befestigenden Basiselement (1), das im montierten Zustand mit einer Anschlagfäche gegen das Mauerwerk anliegt und von dem rechtwinklig zur Anschlagfläche ein eine geradlinige Führungsbahn bildender Träger (3) wegragt, auf der ein mit einer zur Anschlagfläche parallelen Montagefläche versehenes Verankerungselement (6) längsverschiebbar gelagert und in jeder Verschiebelage feststellbar ist, dadurch gekennzeichnet, dass der Träger (3) eine prismatische oder kreiszylindrische Form aufweist, dass das Basiselement (1) quer zur Trägerlängsachse angeordnet ist und allseits über die Trägerseiten radial vorsteht, und dass am Verankerungselement (6) eine mit dem Träger (3) teleskopierende Führung (13) vorhanden ist.

2. Element nach Anspruch 1, dadurch gekennzeichnet, dass die Führung (13) auf der der Montagefläche gegenüberliegenden Rückseite des Verankerungselementes (6) angeordnet ist.

3. Element nach Anspruch 1 oder 2, dadurch gekennzeichnet, dass das Verankerungselement (6) eine zur Trägerlängsachse koachsiale Durchbrechung (9) aufweist.

4. Element nach Anspruch 3, dadurch gekennzeichnet, dass der Träger (3) die Durchbrechung (9) durchsetzt und dass die Durchbrechung (9) die Führung bildet.

5. Element nach Anspruch 3, dadurch gekennzeichnet, dass auf der Rückseite des Verankerungselementes (6) zwischen diesem und der Führung (13) ein Einlasskasten (10) ausgebildet ist, dessen lichter Querschnitt gleich jenem der Durchbrechung (9) ist.

6. Element nach einem der Ansprüche 1 bis 5, dadurch gekennzeichnet, dass der Träger (3) ein an den Enden offenes Hohlprofil ist, das vorzugsweise koachsial an eine Durchbrechung (4) im Basiselement (1) anschliesst.

7. Element nach einem der Ansprüche 5 oder 6, dadurch gekennzeichnet, dass die Führung (13) gegen den Einlasskasten (10) bzw. die Durchbrechung (9) offen ist.

8. Element nach einem der Ansprüche 1 bis 7, dadurch gekennzeichnet, dass das Verankerungselement (6) mit der Montagefläche durch eine schraubengängige Platte gebildet ist.

9. Element nach einem der Ansprüche 5 bis 8, dadurch gekennzeichnet, dass die Montagefläche grösser als der lichte Querschnitt des Einlasskastens (10) ist.

10. Element nach einem der Ansprüche 1 bis 9, dadurch gekennzeichnet, dass die Montagefläche grösser als die Anschlagfläche ist.

11. Element nach Anspruch 8, dadurch gekennzeichnet, dass das Verankerungselement (6) mit einer wabenartigen, in die Montagefläche offenen Lochung (7) versehen ist.

12. Element nach einem der Ansprüche 1 bis 11, dadurch gekennzeichnet, dass die Führung (13) und das Verankerungselement (6) und gegebenenfalls der Einlasskasten (10) einstückig, vorzugsweise aus einem verrottungsresistenten Kunststoff hergestellt sind.

13. Element nach Anspruch 1 oder 6, dadurch gekennzeichnet, dass die Führung (13) ein Hohlprofil aufweist und mit dem Träger (3) axial teleskopiert.

14. Element nach Anspruch 13, dadurch gekennzeichnet, dass der Träger (3) und die Führung (13) zur längsachsialen Verschiebung mit einander entsprechenden Gewinden versehen sind.

15. Element nach Anspruch 1, dadurch gekennzeichnet, dass der Träger (3) und die Führung (13) ein Kreuzprofil aufweisen.

16. Element nach einem der Ansprüche 2 bis 15, dadurch gekennzeichnet, dass die Führung (13) aussenseitig eine zur Verschieberichtung parallele Nut (15) zur Aufnahme einer Schraube (16) aufweist.

## Claims

1. Element for fastening apparatus or objects on an externally insulated building façade or on an insulated wall or ceiling, having a basic element (1) to be fastened to the masonry, which basic element in the assembled condition is in contact with the masonry by means of a stop face and from which basic element a support (3) forming a straight guide track protrudes at right angles to the stop face, on which guide track an anchoring element (6) provided with an assembly surface parallel to the stop face is supported so that it can be longitudinally displaced and can be fixed in each displacement location, characterised in that the support (3) has a prismatic or circular cylindrical shape, in that the basic element (1) is arranged transverse to the support longitudinal axis and protrudes radially on all sides beyond the sides of the support, and in that a guide (13) which can be telescoped in conjunction with the support (3) is present on the anchoring element (6).

2. Element according to Claim 1, characterised in that the guide (13) is arranged on the rear surface, opposite to the assembly surface, of the anchoring element (6).

3. Element according to Claim 1 or 2, characterised in that the anchoring element (6) has an opening (9) which is coaxial with the support longitudinal axis.

4. Element according to Claim 3, characterised in that the support (3) passes through the opening (9) and in that the opening (9) forms the guide.

5. Element according to Claim 3, characterised in that a lead-in box (10) is configured on the rear surface of the anchoring element (6) between the latter and the guide (13), the clear cross-section of which lead-in box is equal to that of the opening (9).

6. Element according to one of Claims 1 to 5, characterised in that the support (3) is a hollow profile section open at the ends, which hollow profile section preferably abuts coaxially an opening (4) in the basic element (1).

7. Element according to one of Claims 5 or 6, characterised in that the guide (13) is open towards the lead-in box (10) and the opening (9).

8. Element according to one of Claims 1 to 7, characterised in that the anchoring element (6), together with the assembly surface, is formed by a plate into which screws can be inserted.

9. Element according to one of Claims 5 to 8, characterised in that the assembly surface is larger than the clear cross-section of the lead-in box (10).

10. Element according to one of Claims 1 to 9, characterised in that the assembly surface is larger than the stop face.

11. Element according to Claim 8, characterised in that the anchoring element (6) is provided with an open honeycomb-type perforation (7) in the assembly surface.

12. Element according to one of Claims 1 to 11, characterised in that the guide (13) and the anchoring element (6) and, if appropriate, the lead-in box (10) are manufactured in one piece, preferably in a decay-resistant plastic.

13. Element according to Claim 1 or 6, characterised in that the guide (13) has a hollow profile section and, in conjunction with the support (3), telescopes axially.

14. Element according to Claim 13, characterised in that the support (3) and the guide (13) are provided with mutually corresponding threads for longitudinal axial displacement.

15. Element according to Claim 1, characterised in that the support (3) and the guide (13) have a cruciform profile section.

16. Element according to one of Claims 2 to 15, characterised in that the guide (13) has, on its outside, a groove (15), which is parallel to the displacement direction, for accepting a screw (16).

## Revendications

1. Elément pour fixer des appareils ou des objets sur une façade de bâtiment isolée extérieurement ou sur un mur ou un plafond isolé, comportant un élément de base (1) devant être fixé sur la maçonnerie et qui, à l'état monté, s'applique par une surface de butée contre 1a maçonnerie et à partir duquel fait saillie, perpendiculairement à la surface de butée, un support (3), qui constitue une piste rectiligne de guidage et sur lequel un élément d'ancrage (6), qui est pourvu d'une surface de montage parallèle à la surface de butée, est monté de manière à être déplaçable longitudinalement et à pouvoir être fixé dans n'importe quelle position de déplacement, caractérisé en ce que le support (3) possède une forme prismatique ou une forme de cylindre circulaire, que l'élément de base (1) est disposé transversalement par rapport à l'axe longitudinal du support et fait saillie radialement de tous côtés au-delà des faces du support et qu'il est prévu comme élément d'ancrage (6) un guide (13) déplaçable de façon télescopique par rapport au support (3).

2. Elément selon la revendication 1, caractérisé en ce que le guide (13) est disposé sur la face arrière de l'élément d'ancrage (6), qui est située à l'opposé de la surface de montage.

3. Elément selon la revendication 1 ou 2, caractérisé en ce que l'élément d'ancrage (6) possède un passage traversant (9) coaxial à l'axe longitudinal du support.

4. Elément selon la revendication 3, caractérisé en ce que le support (3) traverse le passage traversant (9) et que le passage traversant (9) forme le guide.

5. Elément selon la revendication 3, caractérisé en ce que sur la face arrière de l'élément d'ancrage (6) est formé, et ce entre cet élément d'ancrage et le guide (13), un boîtier d'insertion (10), dont la section transversale de passage est égale à celle du passage traversant (9).

6. Elément selon l'une des revendications 1 à 5, caractérisé en ce que le support (3) est un profilé creux, qui est ouvert à ses extrémités et qui se raccorde de préférence coaxialement à un passage traversant (4) formé dans l'élément de base (1).

7. Elément selon l'une des revendications 5 ou 6, caractérisé en ce que le guide (13) est ouvert en direction du boîtier d'insertion (10) ou du passage traversant (9).

8. Elément selon l'une des revendications 1 à 7, caractérisé en ce que l'élément d'ancrage (6) avec la surface de montage est formé par une plaque, dans laquelle des vis peuvent être insérées.

9. Elément selon l'une des revendications 5 à 8, caractérisé en ce que la surface de montage est plus étendue que la section transversale de passage du boîtier d'insertion (10).

10. Elément selon l'une des revendications 1 à 9, caractérisé en ce que la surface de montage est plus étendue que la surface de butée.

11. Elément selon la revendication 8, caractérisé en ce que l'élément d'ancrage (6) est pourvu de perforations en nid d'abeilles (7) qui s'ouvrent dans la plaque de montage.

12. Elément selon l'une des revendications 1 à 11, caractérisé en ce que le guide (13) et l'élément d'ancrage (6) et éventuellement le boîtier d'insertion (10) sont fabriqués d'un seul tenant, de préférence en une matière plastique résistant au pourrissage.

13. Elément selon la revendication 6, caractérisé en ce que le guide (13) possède un profil creux et est déplaçable axialement de façon télescopique par rapport au support (3).

14. Elément selon la revendication 13, caractérisé en ce que le support (3) et le guide (13) sont pourvus, pour le déplacement suivant l'axe longitudinal, de filetages qui se correspondent.

15. Elément selon la revendication 1, caractérisé en ce que le support (3) et le guide (13) possèdent un profil cruciforme.

16. Elément selon l'une des revendications 2 à 15, caractérisé en ce que le guide (13) comporte, sur son côté extérieur, une rainure (15) parallèle à la direction de déplacement et servant à recevoir une vis (16).
